# EUROPÄISCHE PATENTSCHRIFT

(11) **EP 3 058 804 B1**
(45) Veröffentlichungstag und Bekanntmachung des Hinweises auf die Patenterteilung: **05.12.2018**
(21) Anmeldenummer: 16151450.0
(22) Anmeldetag: 15.01.2016
(51) Int. Cl.: A01D 57/20, A01D 84/00

(54) **HEUWERBUNGSMASCHINE**
HAY BALER
FANEUSE

(30) Priorität: 20.02.2015 DE 102015002236
(43) Veröffentlichungstag der Anmeldung: 24.08.2016
(73) Patentinhaber: PÖTTINGER Landtechnik GmbH, 4710 Grieskirchen (AT)
(72) Erfinder: Baldinger, Markus, 4084 St. Agatha (AT); Lehner, Josef, 4732 St. Thomas (AT)
(74) Vertreter: Thoma, Michael

(56) Entgegenhaltungen:
- EP-A1- 1 306 000
- EP-A1- 2 789 223
- EP-A2- 1 779 716
- DE-A1-102010 010 862
- US-A- 4 768 334

## Beschreibung

Die vorliegende Erfindung betrifft eine Heuwerbungsmaschine in Form eines Mergers zum Schwaden und/oder Querversetzen von Erntegut, mit mehreren Mergereinheiten, die jeweils einen Aufsammelförderer zum Aufsammeln des Ernteguts vom Boden und einen Querförderer zum Querfördern des aufgesammelten Ernteguts quer zur Fahrtrichtung umfassen.

Solche Merger sind üblicherweise an einen Schlepper anbaubare Anbaugeräte, die halm- und/oder blattförmiges Erntegut wie beispielsweise geschnittenes Gras, Heu oder Stroh vom Boden aufsammeln und in Schwaden ablegen können. Anders als bei Rechkreiselschwadern wird dabei das Erntegut nicht direkt auf dem Boden liegend zu einem Schwad zusammengerecht, sondern zunächst vom Boden aufgesammelt und erst sodann quergefördert, um in einem Schwad abgelegt zu werden. Der Aufsammelförderer kann dabei ein Zinkenförderer mit umlaufend antreibbaren Förderzinken sein, insbesondere in Form einer sog. Pickup, bei der Förderzinken zwischen Abstreiferblechen hervorstehen und auf ringförmigen Umlaufbahnen in aufrechten Umlaufebenen angetrieben werden. Der Querförderer solcher Merger kann als Umlaufförderer mit einem endlos umlaufenden Fördermittel, insbesondere in Form eines Bandförderers ausgebildet sein, vgl. beispielsweise DE 10 2010 010 862 A1, die mehrere, heck- und frontseitig montierbare Mergereinheiten beschreibt. Anstelle eines endlos umlaufenden Förderbands kann auch ein Förderboden vorgesehen sein, über den separate Förderwerkzeuge in Querförderrichtung hinwegstreichen, vgl. EP 0 255 458. Solche Merger zeichnen sich durch eine hohe Futter- bzw. Erntegutqualität aus, da Verunreinigungen wie Steine oder Erdklumpen weniger leicht in den Schwad gelangen, wenn das Erntegut vor dem Querfördern zunächst vom Boden angehoben wird.

Um größere Arbeitsbreiten zu ermöglichen, gleichzeitig jedoch den Straßentransport sicherzustellen und die hierfür maximal zulässige Straßentransportbreite einhalten zu können, wurde bereits vorgeschlagen, mehrere Mergereinheiten nebeneinander anzuordnen, so dass sich die Mergereinheiten in ihren Arbeitspositionen ergänzen und andererseits in eine Transportstellung verbringbar sind, in der die im Betrieb äußeren Mergereinheiten nach innen bzw. nach oben geschwenkt sind. Beispielsweise ist von der Firma ROC unter der Typenbezeichnung RT-Serie ein Merger bekannt, der einen durch ein Fahrwerk am Boden abgestützten Maschinenrahmen besitzt, an dem einerseits mittig eine zentrale Mergereinheit aufgehängt ist und andererseits rechts und links zwei seitliche Mergereinheiten angelenkt sind, die in der abgesenkten Arbeitsstellung rechts und links von der zentralen Mergereinheit positioniert sind und durch ein verschwenkbares Tragarmgestänge nach innen und oben in eine Transportstellung verschwenkt werden können, in der die seitlichen Mergereinheiten nicht oder nur unwesentlich über die zentrale Mergereinheit vorstehen.

Solche bislang bekannten Merger mit mehreren Mergereinheiten sind jedoch in verschiedener Hinsicht nachteilig. Zum einen sind die Fahreigenschaften bei schnellerem Fahren sowohl auf dem Feld als auch auf der Straße nachteilig. Durch die hohe Masse des Anbaugeräts am Heck des Schleppers und den nach oben geschwenkten Seitenmergern mit hohem Schwerpunkt ergibt sich ein instabiles Fahrverhalten insbesondere in Kurven. Zum anderen ergibt sich im Bereich des Mergerfahrwerks ein hoher Bodendruck, der zu einer unerwünschten Bodenverdichtung führt.

Zum anderen ist die Variabilität hinsichtlich der ablegbaren Schwadkonfigurationen begrenzt, obwohl die Aufhängung und Rahmenkonstruktion für die Anordnung der mehreren Mergereinheiten relativ bauaufwändig und kostenintensiv ist. Im Wesentlichen ergibt sich hinsichtlich der Schwadablage lediglich die Option, das von allen Mergereinheiten zusammengeförderte Erntegut in einem Schwad rechts oder links von den äußeren Mergereinheiten abzulegen.

Der vorliegenden Erfindung liegt die Aufgabe zugrunde, eine verbesserte Heuwerbungsmaschine der genannten Art zu schaffen, die Nachteile des Standes der Technik vermeidet und Letzteren in vorteilhafter Weise weiterbildet. Insbesondere soll mit einer einfachen, kompakten Anordnung der Mergereinheiten eine hohe Variabilität bei der Schwadablage erreicht und stabile Fahreigenschaften erzielt werden, ohne hierfür kostenintensive Aufhängungsmechanismen und Rahmenkonstruktionen mit Spezialfahrwerken zu benötigen.

Erfindungsgemäß wird die genannte Aufgabe durch eine Heuwerbungsmaschine gemäß Anspruch 1 gelöst. Bevorzugte Ausgestaltungen der Erfindung sind Gegenstand der abhängigen Ansprüche.

Es wird also vorgeschlagen, die Mergereinheiten nicht mehr alle an einem gemeinsamen Maschinenrahmen des Anbaugeräts anzuordnen, sondern die Mergereinheiten auf die Frontseite und die Heckseite des Schleppers aufzuteilen, so dass die Mergereinheiten durch ihren Versatz in Fahrtrichtung ohne gegenseitige Behinderung und Kollisionsproblematik variabler positioniert werden können. Erfindungsgemäß sind die Mergereinheiten in Front- und Heckmerger zum front- und heckseitigen Schlepperanbau aufgeteilt, wobei zumindest ein Frontmerger in der Fahrspur des Schleppers positionierbar und zumindest ein Heckmerger quer zur Fahrtrichtung zum Frontmerger versetzt positionierbar angeordnet sind. Durch den zumindest einen in der Fahrspur des Schleppers laufenden Frontmerger kann das Erntegut vor einem Überfahren durch den Schlepper bewahrt werden, so dass eine schonende Futterverarbeitung ermöglicht ist. Zum anderen kann der Versatz des Heckmergers zum Frontmerger aufgrund der Anordnung an verschiedenen Schlepperenden, d.h. Front und Heck, einfach und ohne Kollisionsproblematik zwischen den Mergereinheiten für die jeweilige Schwadaufgabe passend gewählt werden.

In Weiterbildung der Erfindung können die Front- und Heckmerger dabei jeweils an einem Anbaurahmen aufgehängt sein, der am Schlepper anhebbar und absenkbar angebaut werden kann, so dass die Front- und Heckmerger jeweils durch Anheben des Anbaurahmens vom Boden aushebbar sind. Der Anbaurahmen kann hierbei durch eine geeignete Anbauvorrichtung wie beispielsweise einen Anbaubock und/oder eine Dreipunktanlenkung am Schlepper angelenkt sein, so dass der Anbaurahmen und damit der daran angelenkte Front- bzw. Heckmerger allein vom Schlepper frei auskragend gehalten werden kann, wenn der Anbaurahmen entsprechend angehoben ist. Durch die Aufteilung in Front- und Heckmerger wird dabei der Anbaurahmen auch nicht überbelastet, selbst wenn mehrere Mergereinheiten angebaut sind.

Insbesondere kann der genannte Anbaurahmen fahrwerkslos ausgebildet sein. Durch das Weglassen eines Geräterahmenfahrwerks, wie es Aufsattelgeräte kennen, können die Kosten beträchtlich gesenkt werden. Zum anderen können negative Fahreigenschaften wie Kurvenschneiden und direkte Stöße auf die Mergereinheiten durch Überfahren von Bodenunebenheiten vermieden werden. Gleichzeitig wird durch die Aufteilung in Front- und Heckmerger trotz Weglassen eines eigenen Gerätefahrwerks die Gewichtsbelastung auf den Schlepper ausbalanciert, so dass die Traktion und das Kurvenfahrverhalten des Schleppers gegenüber reinen Heckmergern mit großen Arbeitsbreiten deutlich verbessert wird.

Die Mergereinheiten können von den genannten front- und heckseitigen Anbaurahmen schwebend über den Boden geführt werden, was auch für die abgesenkte Arbeitsstellung gelten kann. Gleichwohl können die Mergereinheiten durch eigene Tastfahrwerke, die an den Mergereinheiten selbst angebracht sein können, am Boden abgestützt sein bzw. den Boden abtasten, um eine bessere Bodenanpassung zu erzielen. Beispielsweise können solche Tastfahrwerke in Form von Tasträdern, Gleitkufen oder Gleittellern unter dem Querförderer oder auch hinter oder neben dem Querförderer oder Aufsammelförderer angeordnet sein.

Um eine gute Bodenanpassung zu ermöglichen, können die genannten Mergereinheiten vorteilhafterweise pendelnd an dem front- bzw. heckseitigen Anbaurahmen aufgehängt sein, wobei die pendelnde Aufhängung zumindest eine liegende Pendelachse umfassen kann, die sich vorzugsweise etwa in Fahrtrichtung erstrecken kann. Hierdurch können die Mergereinheiten einschließlich Aufsammelförderer und Querförderer Längswellen in der Bodenkontur oder seitlich abschüssigen Hangflanken bzw. Geländekonturen folgen. Alternativ oder zusätzlich zu einer solchen sich zumindest näherungsweise in Fahrtrichtung erstreckenden Pendelachse kann die pendelnde Aufhängung der Mergereinheiten auch eine liegende Pendelachse quer zur Fahrtrichtung umfassen, so dass sich die Mergereinheiten Querwellen quer zur Fahrtrichtung anpassen können.

Um eine leichtfüßige Bodenanpassung zu erzielen und ein zu hartes Aufsetzen oder gar ein Einstechen in den Boden zu vermeiden, können die Mergereinheiten gewichtsentlastet aufgehängt sein. Insbesondere können die Front- und Heckmerger jeweils an zumindest einem Tragarm aufgehängt sein, der um eine liegende Tragarmschwenkachse auf- und niederwippbar an einem Anbaurahmenteil gelagert sein kann und durch eine Gewichtsentlastungseinrichtung entgegen der Gewichtskraft des jeweiligen Front- oder Heckmergers entlastet oder vorgespannt ist. Die genannte Gewichtsentlastungseinrichtung kann hierbei beispielsweise eine Federeinrichtung wie eine mechanische Feder aufweisen. Alternativ oder zusätzlich kann die Gewichtsentlastungseinrichtung auch einen Druckmittelzylinder oder einen durch ein Druckmittel betätigbaren Stellaktor aufweisen, der bei entsprechender Druckbeaufschlagung beispielsweise aus einem Druckspeicher die gewünschte Gewichtsentlastung bewirken kann. Die genannte Gewichtsentlastungseinrichtung kann hierbei an dem genannten Tragarm oder auch direkt an der Mergereinheit bzw. einem damit verbundenen Anlenkstück angreifen und andererseits am genannten Anbaurahmen angelenkt sein.

Um die Variabilität der Schwadablage zu vergrößern, ist der zumindest eine Heckmerger quer zur Fahrtrichtung in verschiedene Arbeitspositionen verstellbar aufgehängt, so dass durch Querverstellen des Heckmergers eine Überlappungs- und oder Spaltbreite zwischen der Arbeitsspur bzw. Arbeitsbreite des Frontmergers und der Arbeitsbreite bzw. Arbeitsspur des Heckmergers variabel einstellbar ist. Dabei kann der zumindest eine Heckmerger dabei einerseits in eine Position querverstellt werden, in der ein vom Frontmerger abgelegter Schwad vom Heckmerger wieder aufgenommen und weiter querversetzt wird. Der Heckmerger kann ferner in eine Arbeitsstellung querverstellt werden, in der der Heckmerger vorteilhafterweise überlappungsfrei neben der Fahrspur des Frontmergers angeordnet ist. Dies kann einerseits eine sozusagen nahtlose Anschlussstellung sein, in der der Heckmerger vom Frontmerger liegengelassenes Erntegut aufnimmt und sich Front- und Heckmerger sozusagen nahtlos ergänzen. Andererseits kann der Heckmerger auch derart querversetzt zum Frontmerger positioniert werden, dass zwischen den Fahrspuren des Frontmergers und des Heckmergers ein Spalt verbleibt, in dem beispielsweise ein Schwad gemeinsam vom Frontmerger und Heckmerger abgelegt werden kann.

Die genannte Querverstellbarkeit des zumindest einen Heckmergers kann mit verschiedenen Aufhängungs- und Rahmenkonfigurationen erzielt werden. Beispielsweise kann der Heckmerger an einem teleskopierbaren Tragarm aufgehängt sein, der in Arbeitsstellung in liegender Ausrichtung quer zur Fahrtrichtung auskragt. Durch Ein- und Austeleskopieren kann die daran aufgehängte Mergereinheit in Fahrtrichtung betrachtet weiter rechts oder weiter links positioniert werden. Alternativ oder zusätzlich zu einem solchen teleskopierbaren Tragarm kann die Mergereinheit auch verschiebbar an einem sich in Arbeitsstellung liegend quer zur Fahrtrichtung erstreckenden Tragarm oder Rahmenteil angelenkt sein, wobei hier beispielsweise eine Schlittenführung oder dergleichen vorgesehen sein kann.

Alternativ oder zusätzlich kann die zuvor genannte Querverstellbarkeit der Mergereinheit auch durch ein verschwenkbares Rahmenteil bzw. einen verschwenkbaren Tragarm realisiert sein, der beispielsweise um eine aufrechte Schwenkachse verschwenkt werden kann, wodurch die daran aufgehängte Mergereinheit weiter nach hinten und/oder weiter nach vorne und dabei gleichzeitig weiter nach innen bzw. weiter nach außen verstellt werden kann.

Gemäss der Erfindung kann auch der zumindest eine Frontmerger in der genannten Weise quer zur Fahrtrichtung in verschiedene Arbeitspositionen verstellbar ausgebildet sein. Die zuvor für die Querverstellbarkeit des Heckmergers genannten Tragarm- und/oder Rahmenausbildungen können analog für die frontseitige Mergerverstellung vorgesehen sein, also insbesondere teleskopierbare Tragarme, Schlitten- oder Schiebelagerungen oder auch verschwenkbare Rahmenteile.

In Weiterbildung der Erfindung kann der Querförderer des Heckmergers und/oder der Querförderer des Frontmergers einen reversierbaren Querfördererantrieb umfassen, so dass die jeweilige Mergereinheit in Fahrtrichtung betrachtet wahlweise links oder rechts ablegen kann. Die Reversierbarkeit kann dabei durch einen umkehrbaren Antriebsmotor wie beispielsweise einen Elektromotor oder auch ein schaltbares Getriebe oder einen schaltbaren Antriebsstrang vorgesehen sein. Hierdurch ergeben sich weitere Variationsmöglichkeiten hinsichtlich der Schwadablage, insbesondere in Verbindung mit der zuvor genannten Querverstellbarkeit des Frontmergers und/oder des Heckmergers.

Um die Schwadablage weiter variabel anpassen zu können, können in Weiterbildung der Erfindung mehrere Frontmerger bzw. mehrere frontseitig angebaute Mergereinheiten vorgesehen sein bzw. kann der Frontmerger in mehrere Untereinheiten unterteilt sein, die jeweils einen eigenen Aufsammelförderer und einen eigenen Querförderer besitzen. Die genannten, mehreren Frontmerger können hierbei in Fahrtrichtung zumindest näherungsweise genauso weit vorne angeordnet sein, so dass sie zumindest näherungsweise in einer gemeinsamen Ebene senkrecht zur Fahrtrichtung angeordnet sein können. Grundsätzlich wäre allerdings auch eine in Fahrtrichtung versetzte Anordnung der mehreren Frontmergereinheiten denkbar.

Vorteilhafterweise können die mehreren Frontmerger hierbei eine Arbeitsposition besitzen, in der die beiden Frontmerger nebeneinander liegend angeordnet sind, wobei die nebeneinander liegende Anordnung näherungsweise spaltfrei bzw. derart aneinander liegend ausgebildet sein kann, dass aufgesammeltes Erntegut von dem Querförderer des einen Frontmergers auf den Querförderer des anderen Frontmergers übergeben werden kann und die Frontmerger einen gemeinsamen Erntegutschwad seitlich neben den beiden Frontmergern ablegen können. Alternativ kann auch eine Anordnung der beiden Frontmerger mit einem Spalt zwischen den beiden Mergereinheiten vorgesehen sein, so dass die beiden Mergereinheiten einen Mittenschwad zwischen sich ablegen können, der dann vorteilhafterweise mittig zur Fahrspur des Schleppers liegen kann und somit nicht von den Rädern des Schleppers überfahren wird.

In vorteilhafter Weiterbildung der Erfindung können die genannten Frontmerger relativ zueinander quer zur Fahrtrichtung querverstellt werden, so dass der Abstand zwischen den beiden Mergern voneinander variiert werden kann und verschiedene Arbeitspositionen einstellbar sind. Diese Querverstellbarkeit der Frontmerger relativ zueinander kann durch eine oder mehrere der vorgenannten Aufhängungs- und Anbaurahmenkonfigurationen erzielt werden. Beispielsweise können die Frontmerger an einem Querträger verschieblich aufgehängt sein.

In Weiterbildung der Erfindung können die Frontmerger auch zueinander verschwenkt und/oder zueinander abgeklappt werden, insbesondere derart, dass in einer Transportstellung ein Frontmerger über einem anderen Frontmerger zu liegen kommt, insbesondere derart, dass die Frontmerger mit ihren Querförderern einander gegenüberliegen. Beispielsweise kann einer der Frontmerger um eine liegende, in Fahrtrichtung weisende Schwenkachse nach oben über den anderen Frontmerger geklappt werden. Hierdurch kann eine kompakte Transportkonfiguration erzielt werden, in der die mehreren Frontmerger lediglich noch die Breite eines einzelnen Frontmergers besitzen.

Die Erfindung wird nachfolgend anhand bevorzugter Ausführungsbeispiele und zugehöriger Zeichnungen näher erläutert. In den Zeichnungen zeigen:

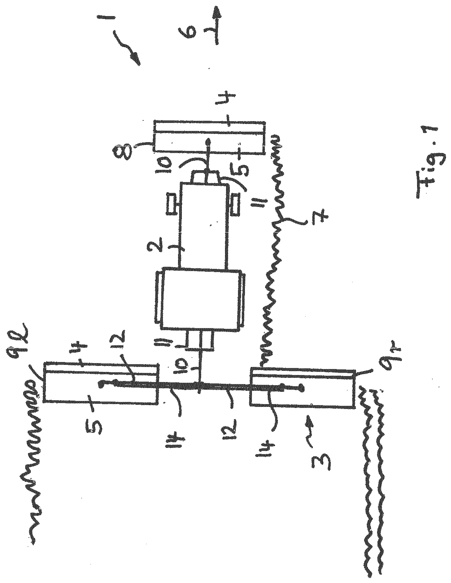

- Fig. 1:: eine schematische Draufsicht auf eine Heuwerbungsmaschine nach einer vorteilhaften Ausführung der Erfindung mit Front- und Heckmergern, wobei eine Breiteneinstellung der Heckmerger gezeigt ist, in der der vom Frontmerger abgelegte Schwad von einem der Heckmerger aufgenommen und noch weiter querversetzt wird,

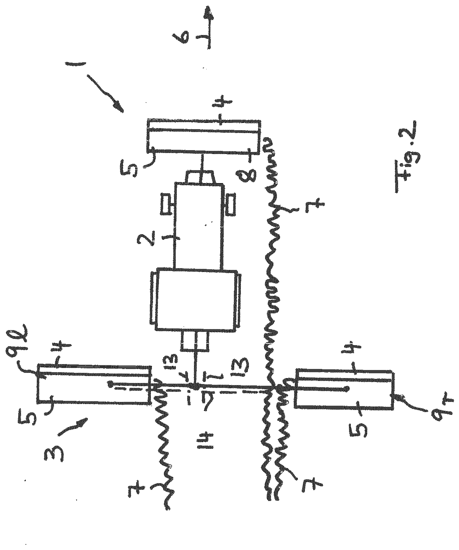

- Fig. 2:: eine schematische Draufsicht auf die Heuwerbungsmaschine aus Fig. 1, wobei eine variierte Breiteneinstellung der Heckmerger gezeigt ist, in der der vom Frontmerger abgelegte Schwad an den Heckmergern vorbeiläuft und einer der Heckmerger seinen Schwad zu dem Frontmerger-Schwad hinzufügt,

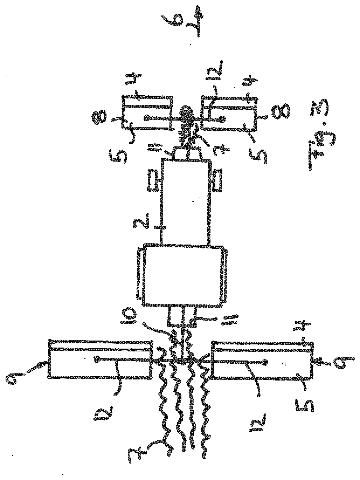

- Fig. 3:: eine schematische Draufsicht auf eine Heuwerbungsmaschine nach einer weiteren Ausführung der Erfindung, wonach der Frontmerger in zwei Untereinheiten unterteilt ist bzw. zwei Frontmerger vorgesehen sind, die querverstellbar angeordnet sind und in einer Stellung dargestellt sind, in der ein zentraler Mittenschwad abgelegt wird,

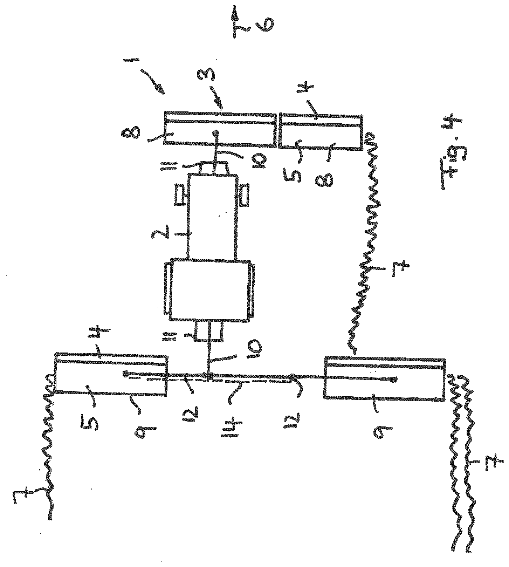

- Fig. 4:: eine schematische Draufsicht auf eine Heuwerbungsmaschine nach einer weiteren Ausführung der Erfindung, die ebenfalls zwei Frontmerger umfasst, von denen einer um eine liegende, in Fahrtrichtung weisende Achse klappbar ist und in einer abgesenkten Arbeitsstellung den anderen Frontmerger ergänzt, und

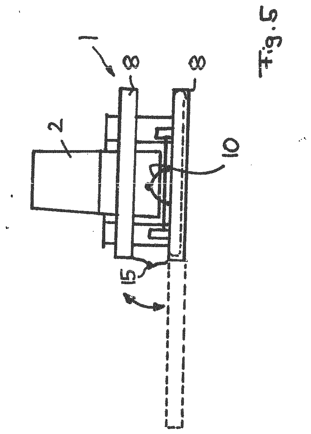

- Fig. 5:: eine Frontansicht des Frontmergers aus Fig. 4, wobei eine nach oben geklappte Transportstellung mit durchgezogenen Linien dargestellt und eine abgesenkte Arbeitsstellung strichliert dargestellt ist.

Wie die Figuren zeigen, kann die Heuwerbungsmaschine 1 als Anbaugerät ausgebildet sein, das an einen Schlepper 2 anbaubar ist. Die Heuwerbungsmaschine 1 umfasst dabei mehrere Mergereinheiten 3, die jeweils einen Aufsammelförderer 4, der am Boden liegendes Erntegut aufsammelt und an einen Querförderer 5 übergibt, der das aufgesammelte Erntegut quer zur Fahrtrichtung 6 fördert und in Schwaden 7 wieder am Boden ablegt.

Die genannten Mergereinheiten 3 sind dabei insgesamt betrachtet liegend ausgerichtet und erstrecken sich mit ihrer länglichen Kontur quer zur genannten Fahrtrichtung 6. Der genannte Aufsammelförderer 4 kann einen Stachelrotor umfassen, der um eine liegende Querachse rotatorisch antreibbar ist, wobei die Stacheln entlang der Umlaufbahn gesteuert oder auch ungesteuert sein können, wie dies bei Pickups an sich bekannt ist. Der dem genannten Aufsammelförderer 4 nachlaufende Querförderer 5 kann beispielsweise als Bandförderer mit einem endlos umlaufenden Förderband ausgebildet sein. Alternativ kann der genannte Querförderer 5 auch eine Querförderschnecke aufweisen, die das aufgesammelte Erntegut querfördert und in einem Schwad ablegt.

Wie die Figuren 1-4 zeigen, sind die Mergereinheiten 3 dabei in Frontmerger 8 und Heckmerger 9 aufgeteilt, die einerseits am Bug bzw. an der Front des Schleppers 2 angebaut und andererseits am Heck des Schleppers 2 angebaut werden können.

Zum Anbau an den Schlepper 3 sind hierbei Anbaurahmen 10 vorgesehen, die einerseits am Heck und andererseits an der Front des Schleppers 2 angebaut werden können, und zwar vorteilhafterweise mittels einer Anbauvorrichtung 11, die den Anbaurahmen 10 frei auskragend halten bzw. anheben und absenken kann, um die an dem Anbaurahmen 10 gelagerten Mergereinheiten 3 vom Boden ausheben oder schwebend über den Boden führen kann. Die genannte Anbauvorrichtung 11 kann hierbei vorteilhafterweise einen Anbaubock umfassen, der mit dem Anbaurahmen 10 verbunden ist, sowie ferner eine Dreipunktanlenkung mit Ober- und Unterlenkern aufweisen, die den genannten Anbaubock am Schlepper 2 anlenken.

Wie Fig. 1 zeigt, können dabei zwei Heckmerger 9 quer bzw. seitlich vom Schlepper 2 auskragend vorgesehen sein. Hierzu kann der Anbaurahmen 10 seitlich auskragende Tragarme 12 umfassen, die an einem Zentralabschnitt des Anbaurahmens 10 angelenkt sein und von diesem quer auskragen können. Vorteilhafterweise können die Tragarme 12 um liegende, näherungsweise in Fahrtrichtung weisende Tragarmschwenkachsen 13 schwenkbar am Anbaurahmen 10 angelenkt sein, so dass die Tragarme 12 auf und nieder wippen können, insbesondere zwischen einer abgesenkten Arbeitsstellung, die die Fig. 1 zeigt, und einer ausgehobenen Vorgewende- und/oder Transportstellung verschwenkt werden können.

Den Tragarmen 12 kann hierbei eine Gewichtsentlastungseinrichtung 14 zugeordnet sein, um die Heckmerger 9 leichtfüßig über den Boden führen zu können. Diese Gewichtsentlastungseinrichtung 14 kann beispielsweise eine Federeinrichtung umfassen oder einen Druckmittelzylinder aufweisen, der aus einem Druckspeicher heraus beaufschlagt sein kann.

Der Frontmerger 8 kann ebenfalls am frontseitigen Anbaurahmen 10 durch eine Gewichtsentlastungseinrichtung 14, die entsprechend ausgebildet sein kann, gewichtsentlastet aufgehängt sein. Der genannte frontseitige Anbaurahmen 10 kann in entsprechender Weise durch eine Anbauvorrichtung 11 anhebbar und absenkbar am Schlepper 2 anbaubar sein, wobei auch hier die Anbauvorrichtung 11 einen rahmenseitigen Anbaubock sowie eine Dreipunktanlenkung mit Ober- und Unterlenkern umfassen kann.

Die Front- und Heckmerger 8 und 9 können vorteilhafterweise pendelnd an dem genannten Anbaurahmen 10 bzw. dessen Tragarme 12 aufgehängt sein, wobei die pendelnde Aufhängung zumindest eine liegende, in Fahrtrichtung weisende Pendelachse umfassen kann. Eine mehrachsig pendelnde Aufhängung ist vorteilhafterweise ebenfalls möglich. Beispielsweise können die Front- und Heckmerger 8 und 9 durch eine kardanische Pendelaufhängung am jeweiligen Anbaurahmenabschnitt aufgehängt sein.

Vorteilhafterweise können die Front- und Heckmerger 8 und 9 am Anbaurahmen 10 querverschieblich gelagert sein bzw. kann der Anbaurahmen 10 querverstellbar ausgebildet sein, so dass die Mergereinheiten quer zur Fahrtrichtung 6 in verschiedene Arbeitsstellungen verbracht werden können. Insbesondere können die Front- und Heckmerger 8 und 9 zur Fahrspur des Schleppers 2 in verschiedene Querversatzstellungen gebracht werden.

Die entsprechende Querverstellungsvorrichtung kann beispielsweise in Form einer teleskopierbaren Ausbildung der Tragarme 12 realisiert sein. Alternativ oder zusätzlich kann auch eine Schiebeführung beispielsweise in Form einer Schlittenaufhängung vorgesehen sein, die es erlaubt, die Heckmerger 9 relativ zu den Tragarmen 12 zu verschieben. Eine entsprechende querverschiebbare Lagerung kann auch für den Frontmerger 8 vorgesehen sein.

Ein Vergleich der Figuren 1 und 2 zeigt die Querverstellbarkeit des hinteren rechten Heckmergers 9r.

Vorteilhafterweise können die Front- und Heckmerger 8 und 9 reversierbare Querfördererantriebe besitzen, was durch einen umkehrbaren Antriebsmotor oder auch ein schaltbares Zwischengetriebe realisiert sein kann. Hierdurch kann vorteilhafterweise jeder der Front- und Heckmerger 8 und 9 wahlweise auf seiner rechten oder linken Seite den Schwad ablegen. In Verbindung mit der Querverstellbarkeit der Mergereinheiten ergeben sich hierdurch viele Ablageoptionen, wie dies ein Vergleich der Figuren zeigt.

Der Frontmerger 8 kann hierbei in zwei Untereinheiten unterteilt sein bzw. können zwei oder mehrere Frontmerger 8 frontseitig an den Schlepper 2 angebaut werden. Wie Fig. 3 zeigt, können die Frontmerger 8 beispielsweise ähnlich den Heckmergern 9 an Tragarmen 12 aufgehängt sein, die sich vom frontseitigen Anbaurahmen 10 bzw. dessen Zentralabschnitt in Arbeitsstellung liegend quer nach außen erstrecken können. Vorteilhafterweise können die beiden Frontmerger 8 hierbei in der zuvor genannten Weise querverstellbar ausgebildet sein, so dass sich einerseits die in Fig. 3 gezeigte Arbeitsstellung einstellen lässt, in der zwischen den beiden Frontmergern 8 ein dazwischen liegender, insbesondere in der Längsmittelebene des Schleppers 2 liegender Ablagespalt vorgesehen werden kann. Alternativ können die Frontmerger 8 vorteilhafterweise auch zusammengefahren werden, so dass an sich ein durchgängiger Frontmerger vorhanden ist, wie dies die Figuren 1 und 2 zeigen. Die beiden Frontmerger ergänzen sich und können bei gleicher Querförderrichtung einen gemeinsamen Schwad entweder rechts oder links von den beiden Mergereinheiten ablegen. Vorteilhafterweise besitzen auch die beiden Frontmerger 8 gemäß Fig. 3 reversierbare Querförderantriebe.

Wie die Figuren 4 und 5 zeigen, können die Frontmerger 8 auch zueinander abgeklappt werden, insbesondere um eine liegende, in Fahrtrichtung weisende Klappachse 15, so dass einer der Frontmerger in einer Transportstellung über dem anderen Frontmerger liegend verbracht werden kann, vgl. Fig. 5. In der ausgeklappten, abgesenkten Arbeitsstellung, vgl. Fig. 4 oder die strichlierte Darstellung in Fig. 5, können die beiden Frontmerger 8 hingegen nebeneinander liegend angeordnet sein und in der zuvor beschriebenen Weise entweder zusammenwirken oder zwischen sich einen Ablagespalt begrenzen.

## Patentansprüche

1. Heuwerbungsmaschine in Form eines Mergers zum Schwaden und/oder Querversetzen von Erntegut, mit mehreren Mergereinheiten (3), die jeweils einen Aufsammelförderer (4) zum Aufsammeln des Ernteguts vom Boden und einen Querförderer (5) zum Querfördern des aufgesammelten Ernteguts quer zur Fahrtrichtung (6) umfassen, wobei die Mergereinheiten (3) in Front- und Heckmerger (8, 9) zum front- und heckseitigen Schlepperanbau aufgeteilt sind, wobei zumindest ein Frontmerger (8) in der Fahrspur des Schleppers (2) positionierbar und zumindest ein Heckmerger (9) quer zur Fahrtrichtung (6) zum Frontmerger (8) versetzt positionierbar ausgebildet sind, **dadurch gekennzeichnet, dass** der zumindest eine Frontmerger (8) und/oder der zumindest eine Heckmerger (9) quer zur Fahrtrichtung (6) in verschiedene Arbeitspositionen querverstellbar aufhängbar ist, so dass durch Querverstellen des zumindest einen Frontmergers (8) und/oder des zumindest einen Heckmergers (9) eine Überlappungs- und Spaltbreite zwischen den Arbeitsbreiten der Front- und Heckmerger variabel einstellbar ist, so dass in einer Arbeitsposition ein vom Frontmerger (8) abgelegter Schwad vom Heckmerger (9) wieder aufgenommen und weiter querversetzt wird und in einer anderen Arbeitsposition zwischen den Fahrspuren des Frontmergers (8) und des Heckmergers (9) ein Spalt verbleibt, in dem ein Schwad gemeinsam vom Frontmerger (8) und Heckmerger (9) abgelegt wird.

2. Heuwerbungsmaschine nach dem vorhergehenden Anspruch, wobei die Front- und Heckmerger (8, 9) jeweils an einem Anbaurahmen (10) aufgehängt sind, der am Schlepper (2) anhebbar und absenkbar anbaubar ist, so dass die Front- und Heckmerger (8, 9) jeweils durch Anheben des Anbaurahmens (10) vom Boden aushebbar sind.

3. Heuwerbungsmaschine nach dem vorhergehenden Anspruch, wobei der Anbaurahmen (10) fahrwerkslos ausgebildet ist und/oder die Front- und Heckmerger nur mittels eines jeweiligen Tastfahrwerks am Boden abgestützt oder frei schwebend über dem Boden geführt sind.

4. Heuwerbungsmaschine nach einem der beiden vorhergehenden Ansprüche, wobei die Front- und Heckmerger (8 und 9) jeweils um zumindest eine liegende Pendelachse pendelnd an dem Anbaurahmen (10) aufgehängt sind.

5. Heuwerbungsmaschine nach einem der Ansprüche 2-4, wobei die Front- und Heckmerger (8, 9) jeweils an zumindest einem Tragarm (12) aufgehängt sind, der um eine liegende Tragarmschwenkachse (13) auf und nieder wippbar an einem Anbaurahmenabschnitt gelagert und durch eine Gewichtsentlastungseinrichtung (14) entgegen der Gewichtskraft des jeweiligen Front- oder Heckmerger (8, 9) entlastet ist.

6. Heuwerbungsmaschine nach dem vorhergehenden Anspruch, wobei die Gewichtsentlastungseinrichtung (14) eine Federeinrichtung oder einen mit Druckmittel beaufschlagbaren Druckmittelaktor umfasst.

7. Heuwerbungsmaschine nach einem der vorhergehenden Ansprüche, wobei der Querförderer (5) des zumindest einen Frontmergers (8) und/oder der Querförderer (5) des zumindest einen Heckmergers (9) einen in der Förderrichtung umkehrbaren Querförderantrieb aufweist.

8. Heuwerbungsmaschine nach einem der vorhergehenden Ansprüche, wobei der zumindest eine Frontmerger (8) in mehrere Untereinheiten unterteilt ist oder mehrere Frontmerger (8) vorgesehen sind, die jeweils einen Aufsammelförderer (4) und einen Querförderer (5) umfassen, wobei die zumindest zwei Untereinheiten oder zumindest zwei Frontmerger (8) in einer Arbeitsposition relativ zueinander bringbar sind, in der die Untereinheiten oder Frontmerger (8) nebeneinander liegend angeordnet sind, und wobei zumindest einer der Querförderer der Untereinheiten oder mehreren Frontmerger (8) einen umkehrbaren Querförderantrieb besitzt, so dass die Querförderer der beiden Untereinheiten oder Frontmerger wahlweise in dieselbe Richtung oder in entgegengesetzte Richtungen fördern.

9. Heuwerbungsmaschine nach dem vorhergehenden Anspruch, wobei die mehreren Frontmerger (8) quer zur Fahrtrichtung (6) in verschiedene Arbeitsstellungen querverstellbar aufhängbar sind, so dass die Frontmerger (8) wahlweise spaltfrei nebeneinander liegend betreibbar oder mit einem Schwadspalt zwischen einander betreibbar sind.

10. Heuwerbungsmaschine nach einem der vorhergehenden Ansprüche, wobei zumindest zwei Frontmerger (8) vorgesehen sind, von denen zumindest einer um eine liegende, etwa in Fahrtrichtung (6) weisende Klappachse (15) klappbar gelagert ist derart, dass der eine Frontmerger (8) in eine Transportstellung über den anderen Frontmerger (8) klappbar ist, insbesondere in eine liegende, Rücken an Rücken zum anderen Frontmerger (8) ausgerichtete Transportstellung bringbar ist.

## Claims

1. Hay baler in the form of a merger for swathing and/or transversally-displacing of harvested material, comprising multiple merger units (3), which respectively comprise a pick-up conveyor (4) for the pick-up of harvested material from the ground, and a transversal conveyor (5) for transversally-conveying the picked-up harvested material transversally to the direction of travel (6), wherein the merger units (3) are divided into front and rear mergers (8, 9) for front-side or rear-side mounting to the tractor, wherein at least one front merger (8) is designed to be positionable in the travel lane of the tractor (2) and at least one rear merger (9) is designed to be positionable displaced transversally to the direction of travel (6) of the tractor (2), **characterized in that** the at least one front merger (8) and/or the at least one rear merger (9) can be suspended transversally to the direction of travel (6) to be transversally-adjustable in different working positions, so that by transversally-adjusting the at least one front merger (8) and/or the at least one rear merger (9), a width of an overlap and gap between the working widths of the front and rear mergers is variably adjustable, so that in a working position, a swath, placed down by the front merger (8), can be picked-up again by the rear merger (9) and is further transversally-displaced, and, in another working position, a gap remains between the travel lanes of front merger (8) and rear merger (9), in which a swath is placed jointly by the front merger (8) and the rear merger (9).

2. Hay baler according to the preceding claim, wherein the front- and rear mergers (8, 9) are respectively suspended on an attachment frame (10), which can be attached to the tractor (2) in a manner as to be liftable and lowerable, so that the front and rear mergers (8, 9) can respectively be lifted off the ground by lifting the attachment frame (10).

3. Hay baler according to one of the preceding claim, wherein the attachment frame (10) is configured without chassis and/or that the front and rear mergers are supported on the ground only by means of a respective contact chassis, or are guided above the ground in a freely-floating manner.

4. Hay baler according to one of the preceding claims, wherein the front and rear mergers (8 and 9) are respectively suspended on the attachment frame (10) in a manner as to swing about at least one horizontal pendulum axis.

5. Hay baler according to one of claims 2 to 4, wherein the front and rear mergers (8, 9) are respectively suspended on at least one support arm (12), which is mounted on an attachment frame portion in a manner be able to seesaw up and down, and which is relieved against the weight force of the respective front or rear mergers (8, 9) by a weight relief device (14).

6. Hay baler according to one of the preceding claims, wherein the weight relief device (14) includes a spring device, or a pressurized fluid actuator which can be applied with a pressurized fluid.

7. Hay baler according to one of the preceding claims, wherein the transversal conveyor (5) of the at least one front merger (8) and/or the transversal conveyor (5) of the at least one rear merger (9) comprises a transversal conveyor drive reversible in the conveying direction.

8. Hay baler according to one of the preceding claims, wherein the at least one front merger (8) is sub-divided into multiple sub-units, or multiple front mergers (8) are provided, which respectively comprise a pick-up conveyor (4) and a transversal conveyor (5), wherein the at least two sub-units or at least two front mergers (8) can be brought into a working position relative to one another, in which the sub-units or front mergers (8) are arranged next to one another, and wherein at least one of the transversal conveyors of the sub-units or of the multiple front mergers (8) has a reversible transversal conveyor drive, so that the transversal conveyors of the two sub-units or front mergers selectively convey in the same direction or in opposite directions.

9. Hay baler according to one of the preceding claims, wherein the multiple front mergers (8) can be suspended in a manner as to be adjustable in various working positions transversally to the direction of travel (6), so that the front mergers (8) can selectively be operated located next to one another without a gap, or with a swathing gap in-between them.

10. Hay baler according to one of the preceding claims, wherein at least two front mergers (8) are provided, out of which at least one is mounted to be foldable about a horizontal folding axis (15), directed approximately in the direction of travel (6), in such a way that the one front merger (8) can be folded into a transport position above the other front merger (8), in particular to a horizontal transport position, oriented back-to-back to the other front merger (8).

## Revendications

1. Faneuse sous forme d'un dispositif collecteur destiné à andainer et/ou décaler transversalement des produits de récolte, comprenant plusieurs unités collectrices (3) qui comprennent respectivement un convoyeur collecteur (4) destiné à ramasser au sol les produits de récolte et un convoyeur transversal (5) destiné à transporter, transversalement au sens de marche (6), les produits de récolte ramassés, les unités collectrices (3) étant réparties en collecteurs frontaux et collecteurs arrière (8, 9) pour le montage côté frontal et côté arrière sur tracteur, au moins un collecteur frontal (8) étant réalisé de manière positionnable dans la voie de déplacement du tracteur (2) et au moins un collecteur arrière (9) étant réalisé de manière positionnable transversalement au sens de marche (6), de manière décalée par rapport au collecteur frontal (8), **caractérisée en ce que** l'au moins un collecteur frontal (8) et/ou l'au moins un collecteur arrière (9) peuvent être accrochés de manière transversalement réglable dans différentes positions de travail, transversalement au sens de marche (6), de sorte qu'en raison du réglage transversal de l'au moins un collecteur frontal (8) et/ou de l'au moins un collecteur arrière (9), une largeur de chevauchement et une largeur d'intervalle entre les largeurs de travail du collecteur frontal et du collecteur arrière sont réglables de manière variable, de sorte que dans une position de travail, un andain déposé par le collecteur frontal (8) est de nouveau pris par le collecteur arrière (9) et est posé transversalement, et que dans une autre position de travail, un intervalle reste entre les voies de circulation du collecteur frontal (8) et du collecteur arrière (9), dans lequel un andain est déposé conjointement par le collecteur frontal (8) et le collecteur arrière (9).

2. Faneuse selon la revendication précédente, les collecteurs frontaux et arrière (8, 9) étant respectivement accrochés sur un cadre de montage (10) qui peut être monté sur le tracteur (2) de manière à pouvoir être levé et baissé, de sorte que les collecteurs frontaux (8) et les collecteurs arrière (9) peuvent être respectivement soulevés du sol par levage du cadre de montage (10).

3. Faneuse selon la revendication précédente, le cadre de montage (10) étant réalisé sans châssis et/ou les collecteurs frontaux et arrière étant réalisés en étant appuyés au sol seulement au moyen d'un châssis palpeur ou en étant suspendus librement au-dessus du sol.

4. Faneuse selon l'une quelconque des deux revendications précédentes, les collecteurs frontaux et arrière (8 et 9) étant accrochés sur le cadre de montage (10) en oscillant respectivement autour d'au moins d'un essieu oscillant horizontal.

5. Faneuse selon l'une quelconque des revendications 2 à 4, les collecteurs frontaux et arrière (8 et 9) étant accrochés respectivement sur au moins un bras de support (12) qui est logé sur une section du cadre de montage en basculant en haut et en bas autour d'un axe de pivotement (13) horizontal du bras de support et est déchargé par un dispositif de délestage (14) en sens inverse de la force du poids du collecteur frontal ou arrière (8, 9) respectif.

6. Faneuse selon la revendication précédente, le dispositif de délestage (14) comprenant un dispositif à ressort ou un actionneur de moyen de pression pouvant être appliqué avec un moyen de pression.

7. Faneuse selon l'une quelconque des revendications précédentes, le convoyeur transversal (5) de l'au moins un collecteur frontal (8) et/ou le convoyeur transversal (5) de l'au moins un collecteur arrière (9) présentant un entraînement de transport transversal réversible dans le sens de transport.

8. Faneuse selon l'une quelconque des revendications précédentes, l'au moins un collecteur frontal (8) étant divisé en plusieurs sous-unités, ou plusieurs collecteurs frontaux (8) étant prévus, lesquels comprennent respectivement un convoyeur collecteur (4) et un convoyeur transversal (5), les au moins deux sous-unités ou les au moins deux collecteurs frontaux (8) pouvant être mis dans une position de travail l'un par rapport à l'autre, dans laquelle les sous-unités ou les collecteurs frontaux (8) sont disposés en étant situés côte à côte, et au moins un des convoyeurs transversaux des sous-unités ou des plusieurs collecteurs frontaux (8) possédant un entraînement de transport transversal réversible, de sorte que les convoyeurs transversaux des deux sous-unités ou des collecteurs frontaux transportent sélectivement dans le même sens ou dans des sens opposés.

9. Faneuse selon l'une quelconque des revendications précédentes, les plusieurs collecteurs frontaux (8) pouvant être accrochés de manière réglable transversalement dans différentes positions de travail transversalement au sens de marche (6), de sorte que les collecteurs frontaux (8) peuvent être exploités sélectivement sans intervalle côte à côte ou exploités avec un intervalle d'andain entre eux.

10. Faneuse selon l'une quelconque des revendications précédentes, au moins deux collecteurs frontaux (8) étant prévus, dont au moins un est monté de manière rabattable autour d'axe de rabattement (15) horizontal, orienté approximativement dans le sens de marche (6) de manière à ce qu'un collecteur frontal (8) soit rabattable sur l'autre collecteur frontal (8) vers une position de transport, notamment dans une position de transport horizontale, orientée dos à dos vers l'autre collecteur frontal (8).
